# EUROPEAN PATENT APPLICATION

(11) **EP 3 064 372 A1**
(43) Date of publication of application: **07.09.2016**
(21) Application number: 15841059.7
(22) Date of filing: 13.07.2015
(51) Int. Cl.: B60C 5/20

(54) **NOVEL INTERNAL STRUCTURAL TIRE FOR AUTOMATICALLY INFLATING SMALL AIR BAG**

(30) Priority: 27.11.2014 CN 201420770147 U
(71) Applicant: Wang, Rongping, Changsha, Hunan 410000 (CN); Luo, Xi, Changsha, Hunan 410000 (CN)
(72) Inventor: Wang, Rongping, Changsha, Hunan 410000 (CN); Luo, Xi, Changsha, Hunan 410000 (CN)
(74) Representative: Boden, Keith McMurray
(86) International application number: PCT/CN2015/000497
(87) International publication number: WO 2016/082295

(57) **Abstract**

A tire with a new internal structure including automatic inflatable gas-chambers, assembly includes a connection arrangement comprising, sequentially, a rubber tire, a gas-chamber layer, a hollow layer and a metal wheel hub, from outside to inside. Wherein, a check valve is installed at a connection position between each gas-chamber of the gas-chamber layer and the hollow layer to inflate the connected gas-chamber automatically, meanwhile, prevent a backflow of the gas from the gas-chamber. The check valve described in this present application is a rubber valve, including a rubber valve body and a rubber valve plate, wherein, a center hole and an inflation hole are opened at the center of the rubber valve body, and a plane of the rubber valve body and a plane of the rubber valve plate are arranged in parallel, and meanwhile a center valve spindle contained by the rubber valve plate inserts the center hole of the rubber valve body. The present application can supply gas to keep a desired pressure in the gas-chambers whenever necessary to maintain a pressure balance in the entire circumference of the tire, in order to keep stability when driving, to resist being punctured and stabbed. Therefore, the tire has a great safety performance and a long service life.

## Description

### Field of the present application

The present application belongs to transportation technology field, and, in particular, relates to a tire with a new internal structure including automatic inflatable gas-chambers.

### Background of the present application

The common tire in the prior art, during an automotive vehicle is driven, usually encounters sharp objects, such as iron nail and glass, etc., and therefore, the tire is punctured, causing a tire flat and burst. Some tires are punctured more than dozens of times in the process from putting into use to discard, which causes tremendous work on tire repair and brings great difficulties and inconvenience to drivers. What's more important is that tire flat or leakage during driving will cause the vehicle losing its balance, and as a result, the driver is unable to control the direction and then accidents will happen. That is extremely dangerous. Chinese Patent Application NO. 201120493823.4 disclosed a tire with a new internal structure. This tire assembly includes a connection arrangement comprising, sequentially, from outside to inside, a rubber tire, a gas-chamber layer, a hollow layer and a metal wheel hub. It solves the problem of sensitivities to being punctured and stabbed. However, if the tire is used for a long time, in some gas-chambers of the gas-chamber layer, problems will arise, such as leakage and under-inflation, which cause an imbalance of the gas pressure in the entire circumference of the tire with the new internal structure. Therefore, the vehicle loses its stability during driving and partially becomes sensitive to puncturing and stabbing. Service life and technical function of the whole tire with the new internal structure will be adversely affected.

### Summary of the present application

The technical problem to be solved: solve the existing technical problems mentioned above by providing a tire with a new internal structure including automatic inflatable gas-chambers. The gas-chambers are inflated, whenever necessary, to keep the pressure therein, to maintain a pressure balance in the entire circumference of the tire, and then to keep a stability when driving, to resist being punctured and stabbed. Therefore, the tire has a great safety performance and a long service life.

The technical solution adopted by the present application includes:
A tire with a new internal structure including automatic inflatable gas-chambers, includes a connection arrangement comprising, sequentially, a rubber tire, a gas-chamber layer, a hollow layer and a metal wheel hub, from outside to inside, wherein, an check valve, which is adopted to inflate a connected gas-chamber automatically and meanwhile to prevent a backflow of the air from the gas-chamber, is installed at a connection position between each gas-chamber of the gas-chamber layer and the hollow layer.

In the technical solution mentioned above, the check valve described in this present application is a rubber valve, including a rubber valve body and a rubber valve plate, wherein a center hole a inflation hole are opened at the center of the rubber valve body, and a plane of the rubber valve body and a plane of the rubber valve plate are arranged in parallel, and meanwhile the rubber valve plate includes a center valve spindle which inserts the center hole of the rubber valve body.

In the technical solution mentioned above, the method to connect the check valve described in this present application with the connected gas-chamber includes: a wall surrounding an installing hole contained by the gas-chamber is embedded in an edge groove of the rubber valve body, or the gas-chamber and the rubber valve body are fabricated as one whole body.

In the technical solution mentioned above, a charging air inlet is installed in the hollow layer described in this present application.

The present application has an advanced performance of resisting puncturing and stabbing because of the gas-chamber layer and hollow layer fixed in the inner side of the tire. Furthermore, the check valve is installed at connection position between each gas-chamber in the gas-chamber layer and the hollow layer, to inflate the gas-chambers automatically and meanwhile prevent the backflow of the gas from the gas-chamber. Therefore, the tire with the new internal structure, even if, is used for a long time and gas leakage or insufficient pressure happens in one or some gas-chambers, the one or some gas-chambers will be automatically inflated by the pressure of the hollow layer through the check valve to maintain a full and harmonious pressure in the gas-chambers of the tire. Therefore, the present application can avoid these defects, for example, unsteadily driving, partially sensitivity to being punctured and stabbed, and a bad safety performance. Therefore, the present application not only has the advantages of resisting being punctured and stabbed but also can inflate the gas-chambers in the gas-chamber layer automatically to maintain a steady and safe driving of the tire, moreover, to obtain a low failure rate and a long service life.

### Brief Description of the Drawings

FIG.1 illustrates the structure of the present application;

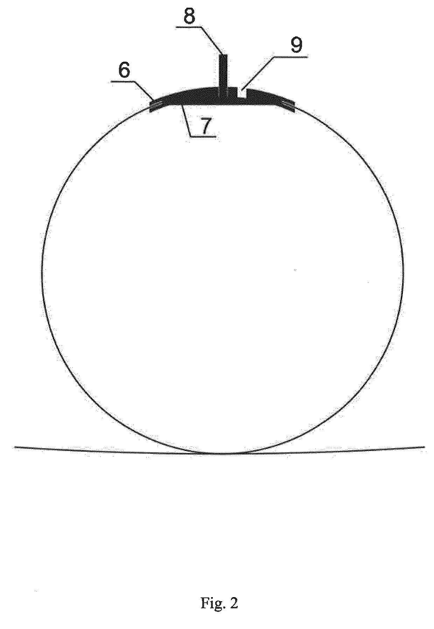

FIG.2 illustrates the structure of the check valve of the present application;

### The drawing reference symbols:

1-Rubber tire, 2-gas-chamber layer, 3-hollow layer, 4- Metal wheel hub, 5- check valve, 6-Rubber valve body, 7- Rubber valve plate, 8- Central valve spindle, 9- Inflation hole

### Detailed Description of the present application

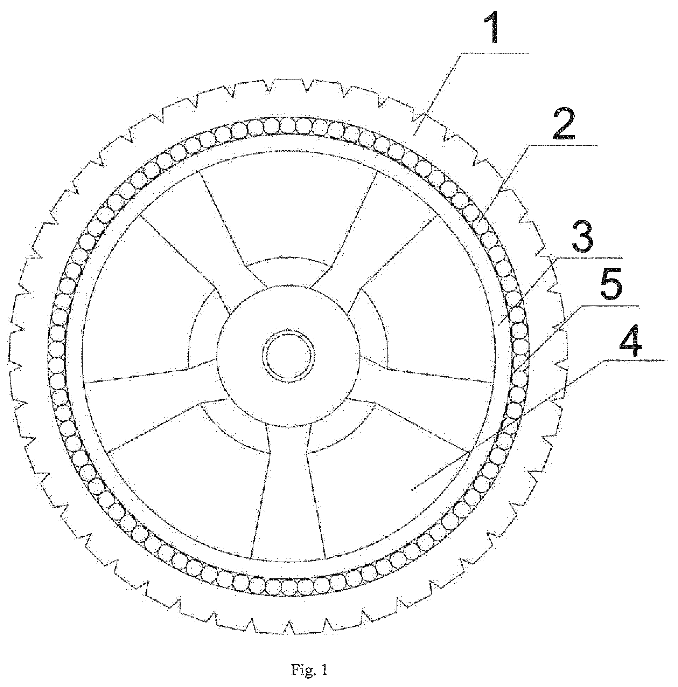

According to FIG.1, the tire with a new internal structure including automatic inflatable gas-chambers in this present application, assembly includes a connection arrangement comprising, sequentially, a rubber tire, a gas-chamber layer, a hollow layer and a metal wheel hub from outside to inside. Wherein, a check valve is installed at the connection position between each gas-chamber in the gas-chamber layer and the hollow layer. The check valve can be adopted to inflate the gas-chamber automatically and, meanwhile, prevent the backflow of the gas from the gas-chamber.

The check valve mentioned above is a rubber valve, including a rubber valve body and a rubber valve plate. The center hole and the inflation hole are opened at the center of the rubber valve body. The plane of the rubber valve body and the plane of the rubber valve plate are arranged in parallel. The center valve spindle of the rubber valve plate is installed inside the center hole of the rubber valve body.

The method to connect the check valve with the connected gas-chamber described in this present application is: the wall surrounding the installing hole of the gas-chamber is embedded in the edge groove of the rubber valve body, or the gas-chamber and the rubber valve body are fabricated as one whole body.

A charging air inlet is installed in the hollow layer mentioned above.

## Claims

1. A tire with a new internal structure including automatic inflatable gas-chambers, assembly including a connection arrangement comprising, sequentially, a rubber tire, a gas-chamber layer, a hollow layer and a metal wheel hub, from outside to inside, wherein a check valve, which is adopted to inflate the connected gas-chamber automatically and meanwhile to prevent a backflow of the air from the gas-chamber, is installed at a connection position between each gas-chamber of the gas-chamber layer and the hollow layer.

2. The tire with a new internal structure including automatic inflatable gas-chambers of Claim 1 wherein the check valve is a rubber valve, including a rubber valve body and a rubber valve plate; wherein
a center hole and an inflation hole are opened at the center of the rubber valve body;
a plane of the rubber valve body and a plane of the rubber valve plate are arranged in parallel;
the rubber valve plate contains a center valve spindle which inserts the center hole of the rubber valve body.

3. The tire with a new internal structure including automatic inflatable gas-chambers of Claim 1 wherein the method to connect the check valve with the connected gas-chamber is:
a wall surrounding an installing hole contained by the gas-chamber is embedded in an edge groove of the rubber valve body, or
the gas-chamber and the rubber valve body are fabricated as one whole body.

4. The tire with a new internal structure including automatic inflatable gas-chambers of Claim 1 wherein a charging air inlet is installed in the hollow layer.
